# EUROPEAN PATENT SPECIFICATION

(11) **EP 3 163 112 B1**
(45) Date of publication and mention of the grant of the patent: **15.01.2020**
(21) Application number: 16194517.5
(22) Date of filing: 19.10.2016
(51) Int. Cl.: F16D 65/12

(54) **BRAKE DISC**
BREMSSCHEIBE
DISQUE DE FREIN

(30) Priority: 19.10.2015 IT UB20155214
(43) Date of publication of application: 03.05.2017
(73) Proprietor: GRIMECA S.r.l., 45010 Ceregnano (RO) (IT)
(72) Inventor: LISCIANI, Giuseppe, 45100 Rovigo (IT); BETTO, Massimo, 35020 Pernumia (Padova) (IT)
(74) Representative: Milli, Simone

(56) References cited:
- EP-A1- 2 112 398
- EP-A1- 2 391 835
- EP-A2- 1 760 351
- CN-Y- 2 440 741
- DE-A1-102010 037 382
- JP-A- H0 217 235
- TW-A- 201 538 869
- TW-B- I 547 654

## Description

This invention relates to a brake disc.

More specifically, this invention relates to the braking band of the disc brakes used on bicycles or motorcycles or in any case on vehicles of various types with two or more wheels.

The brake discs for these vehicles (both for the front and rear wheels) consist basically of:
- an annular band forming two parallel flat surfaces on which act the pads or friction seals for the transmission by friction of the braking torque (for the braking);
- a support of the annular band provided with means for joining to the inner portion of the annular band or integrated with the annular band and configured for being keyed, centrally, to the hub or to a shaft of the wheel of the vehicle.

Various types of brake disc are currently available on the market:
- the so-called monolithic disc with annular band and support rigidly associated together or built as one;
- the floating or semi-floating disc, usually again comprising the support and braking band, but provided with an elastic fixing system, which allows a reduced movement of the braking band relative to the support in the radial direction or in an axial direction or in both directions.

There can be the following sub-categories of brake disc:
- the round disc, that is, with inner and outer profiles having a circular configuration of the braking band;
- the so-called "wave" or "daisy" disc, which has the non-circular outer or inner profile (or both) of the braking band.

The latter "wave" type of brake disc is known from patent document EP971147.

That document illustrates a braking band provided with a plurality of deviations (or "off-sets") of its inner and outer edges (of equal thickness) generating an undulating path of the outer braking band.

A further category of disc brake is that defined as self-ventilating wherein the braking band has, normally, a greater thickness than the types of disc brakes mentioned above for the same application, since ventilation channels or surfaces must be made inside the braking band.

The outer braking band of the self-ventilating disc may be of the monolithic type or be made of two or more parts associated together top form the band.

In addition to the various structures described above, the brake discs may comprise further structures or machining to improve the mechanical properties and efficiency during operation.

It should be noted that the quality of a brake disc is assessed, in particular, by characteristics such as:
- braking torque transmission (for the braking);
- resistance to thermal-mechanical stresses;
- quick dispersion of the heat generated by the braking.

In order to maintain or increase this type of features on the disc brakes it is possible to make, for example, holes or slots (blank or through) on the flat surfaces of the braking band (reducing the mass, draining water, improving heat dispersion and, therefore, improving cooling).

In the case of the brake disc illustrated in patent document EP971147, the undulating path of the braking band has the aim of reducing the total mass of the disc, improving its cooling and preventing the disc from accumulating residue during use, such as, for example, mud.

Currently, therefore, the design of disc brakes, and in particular of the outer braking band, is focussed on constant improvement of the above-mentioned characteristics, maintaining reduced production costs and with the possibility of a fast and easy replacement of the braking band on the vehicles already on the road.

However, the brake disc according to the current configurations are not able to satisfy, completely, all the above-mentioned requirements.

For example, the above-mentioned "wave" model cannot always be adapted easily to the original braking system of vehicles already on the road.

Similarly, the self-ventilating disc brake is more complex and costly to make, requires in principle a greater thickness of the braking band and, in this case, cannot replace the non-self-ventilating disc with which the vehicle was originally equipped.

Document EP-B-2 391 835 discloses a brake disc consisting of two semi discs of different or equal geometric configurations joined together to form the disc as a whole. Document EP 2 112 398 discloses a brake disc with corrugated surface, this kind of solution, definitely "wave", has many drawbacks cited above.

Other types of disc brake (round, monolithic with floating or semi-floating coupling) have the possibility of replacing the existing disc on the vehicle, but may have thermal-mechanical limits (in particular, in extreme conditions of use) for vehicles with high performance and which require components which are able to satisfy safe braking conditions in extreme conditions of use.

The aim of this invention is to provide a brake disc which overcomes the above-mentioned drawbacks of the prior art.

More specifically, the aim of this invention is to provide a brake disc of the round type which can increase the thermo-mechanical performance of the braking band and configured to optimise and improve also the performance of the entire braking system.

A further aim of this invention is to provide a brake disc of the round type which is able to reduce the costs of making the braking band, keeping the dimensions of the band within parameters such as to enable assembly compatible with the braking systems of vehicles already on the road. These aims are fully achieved by the brake disc according to this invention as characterised in the appended claims.

More specifically, the brake disc comprises an annular monolithic band having a thickness forming two flat parallel surfaces defining the contact zones with friction members for the brake and delimited by an outer edge and an inner edge. The annular band has the inner edge equipped with a plurality of radial protrusions.

The brake disc also comprises an element for supporting the annular band associated with, or which can be associated with, the radial protrusions of the inner edge of the annular band. The supporting element is configured to be keyed centrally to a hub of a rotary element.

According to the invention, the brake disc has at least one contact surface of the annular band equipped with a first plurality of recesses made at least along the outer edge of the annular band.

Again according to the invention, each first recess is configured so as to define, in the area involved, a reduction of the thickness of the annular band comprising at least one stretch of the outer edge of the annular band on the corresponding contact surface.

Thanks to the presence of these recesses (spot facing or rebates) the braking band has the possibility, for the same mass and inertia of the braking band, to expose a greater exchange surface to the flow of air and increase the heat dissipation capacity.

Preferably, the brake disc has both the contact surfaces of the annular band (inside and outside when mounted on the wheel) with a first and second plurality of recesses made on the outer edge of the same annular band.

Recesses (spot facing or rebates) on both the contact surfaces considerably increase the exchange surface to be exposed to the flow of air, with consequent increase in the heat dissipation capacity.

This and other features will become more apparent from the following description of a preferred embodiment of the invention, illustrated by way of non-limiting example in the accompanying tables of drawings, in which:
- Figure 1 illustrates a perspective view of a first side of the brake disc according to this invention;
- Figure 2 illustrates a partial perspective view of a second side of the brake disc according to this invention;
- Figure 3 illustrates a front view of the brake disc of Figure 1;
- Figure 4 illustrates a side view of the brake disc of Figure 3;
- Figure 5 is a cross-section through line V - V of Figure 3;
- Figure 6 illustrates a scaled-up detail A of Figure 5.

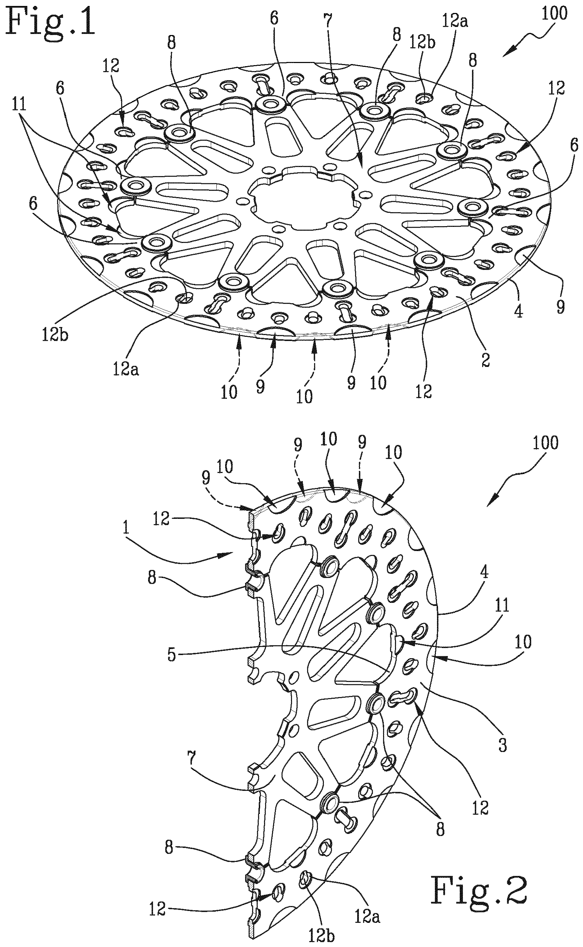

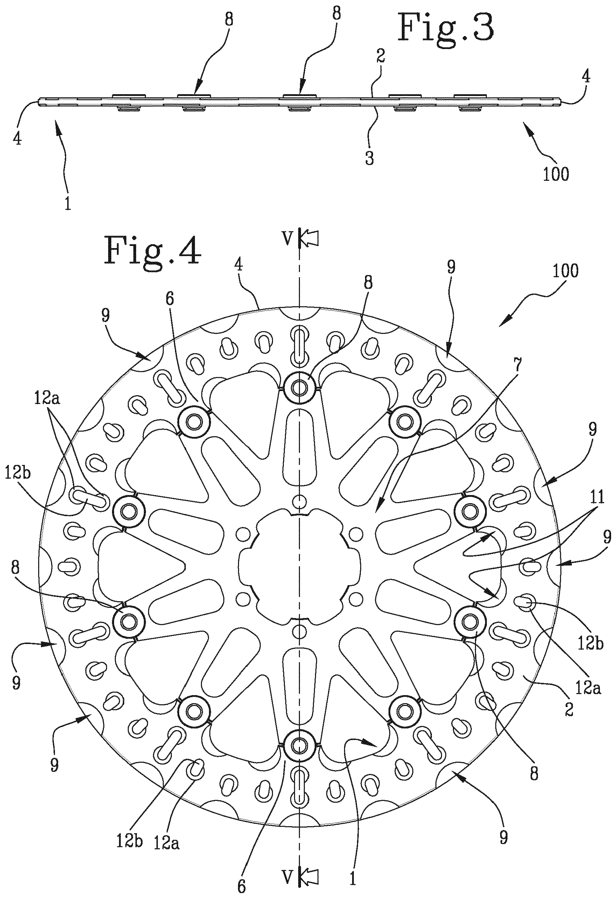

With reference to the accompanying drawings and in particular to Figures 1 to 3, the brake disc according to this invention, labelled 100 in its entirety, is applicable to vehicles such as bicycles or motorcycles, and, for example, three and four-wheeled vehicles, ATV, go-karts, ultralight vehicles and vehicles of various types (not illustrated).

The brake disc 100 according to this invention comprises an annular monolithic band 1 having a thickness S forming two flat surfaces 2 and 3, parallel to each other, defining the zones of contact with friction means (not illustrated) for braking or, in any case for the transmission of a torque by friction. The two surfaces are delimited by an outer edge 4 and an inner edge 5.

Moreover, the annular band 1 has the inner edge 5 equipped with a plurality of protrusions 6, in this case, radial or in any case with a preferably radial direction (ribs).

The brake disk 100 has the annular band 1 and the protrusions 6 formed by a single mechanical piece, i.e. they derived from the processing of a single unfinished mechanical part.

The brake disc 100 also comprises an element 7 for supporting the annular band 1.

The supporting element 7 is associated with or can be associated with the radial protrusions 6 of the inner edge 5 of the annular band.

Basically, the supporting element 7 is joined to the braking band 1, according to two different possibilities.

The first is that the supporting element 7 may be integrated with the annular band 1 in a single body.

The second is that the supporting element 7 may be provided with means 8 for connection with the radial protrusions 6 of the inner edge 5 of the annular band 1.

In both cases, the supporting element 7 is configured to be keyed, centrally, on a wheel of the vehicle (bicycle or motorcycle, not illustrated here) or to the hub of a rotary member.

In the case illustrated, the supporting element 7 (spoke-like frame) has the connecting means 8 (here embodied as a series of bushes) which are illustrated here by way of example and do not limit the scope of protection of this invention.

According to the invention, at least one of the contact surface 2 or 3 of the annular band 1 has a first plurality of recesses 9 (spot facing or rebates) made along the outer edge 4 of the annular band 1.

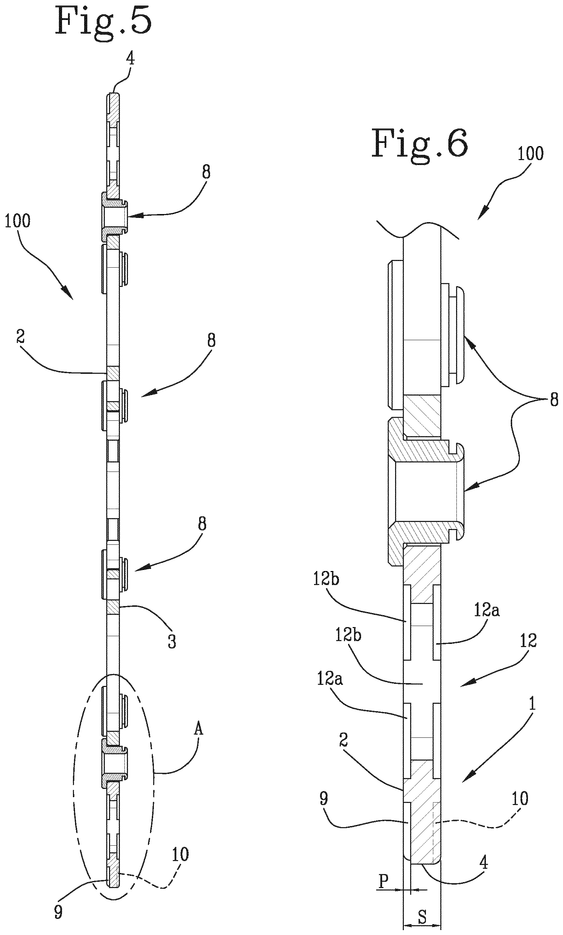

Each first recess 9 is configured so as to define, in the area involved, a reduction of the thickness S of the annular band 1 comprising at least one stretch of the outer edge 4 of the annular band 1 on the corresponding contact surface 2 or 3 (see also Figures 5 and 6).

It should be noted that having formed recesses or spot facings or rebates along at least the outer edge of the annular band creates a discontinuity of the surface designed to allow a greater heat exchange surface area touching the airflow.

Preferably, the first plurality of recesses 9 covers the entire outer circular edge 4 of one of the first and second surfaces 2, 3.

More specifically, the recesses 9 are made, suitably spaced and preferably equidistant to each other in succession, for the entire circular perimeter of the outer edge 4 of the corresponding surface 2, 3.

Preferably, both the contact surfaces 2, 3 of the annular band 1 have a first and a second plurality of recesses 9, 10 made on the outer edge 4 of the annular band 1.

The presence on both the contact surfaces of recesses or spot facing or rebates allows the definition of an aerodynamic architecture which is able to increase considerably the thermal exchange surface.

More specifically, this interaction of the aerodynamics of the flow of air interacts not merely with the undulating shape created by the rebates on the surfaces 2 and 3, but also on the outer and inner edges 4 and 5 of the disc, and, therefore, on the entirety of the braking band.

Preferably, the second plurality of recesses 10 covers the entire outer circular edge 4 of the other between the first and second surface 2, 3.

In particular the recesses 10 are made suitably spaced and preferably equidistant from each other in series for the entire circular perimeter of the outer edge 4 of the corresponding surface 2, 3.

In light of this, the first and the second plurality of recesses 9, 10 made on the two contact surfaces 2, 3 of the annular band 1 are positioned preferably alternating with each other along the circular perimeter of the annular band 1.

In other words, if a recess 9 or 10 is formed at a point of the outer edge 4 of one of the surfaces 2 or 3, on the opposite surface the same area is continuous and vice versa.

In this way, the geometrical structure of the outer edge 4 of the annular band 1 has a series, which is continuous, but alternating, of recesses 9 or 10 on one side and the other of the outer edge 4.

The recesses 9 or 10 determines, on the single mechanical piece from which is formed the annular band 1, a thickness S reductions on the single-piece able to modify the exchange surfaces of the air flow.

The annular band in a single mechanical piece allows to obtain a high degree of mechanical strength and it allows to calculate the optimal thickness S reductions according to precise and optimal parameters for the object set.

Each recess 9, 10 made on the surfaces 2, 3 has a curved shape (that is, a flat conical curved portion), preferably a circular arc shape, wherein the open portion of the arc coincides with the stretch of the outer edge 4 touched by the annular band 1.

This feature makes it possible to have the exchange surface for the flow of air in a direct and a frontal manner.

In a first embodiment, each recess 9, 10 has an equal depth P on the corresponding contact surface 2, 3 of the annular band 1.

Alternatively, the recesses 9, 10 can have different depths P on the corresponding contact surface 2, 3 of the annular band 1.

In other words, there may be several different construction combinations according to the latter concept, that is to say:
- all the first and second plurality of recesses 9 and 10 has an equal depth P;
- the first plurality of recesses 9 has a depth P greater than the depth P of the second plurality of recesses 10 or vice versa;
- the individual recesses 9 or 10 of the first and second plurality may have different depths P even individually to each other.

In other words, the annular band 1 in a single piece has a thickness S differentiated by the presence of the recesses 9 or 10 along its annular development.

Then, the thickness S of the annular band 1 in a single piece is given, where present, from the difference between the same thickness S and the depth P of the grooves 9 or 10.

It has, therefore, that the annular band 1 in one piece presents different thicknesses S, also alternating, along the annular arc to define a single annular piece in diversified thickness S.

This type of choice is a function of the selected technical design and the final use of the brake disc.

Preferably, the brake disc 100 also comprises a third plurality of recesses 11 (spot facing or rebates) made along the inner edge 5 of the annular band 1.

Each recess 11 of the third plurality being configured so as to define, in the area involved, a reduction of the thickness S of the annular band 1 comprising at least one stretch of the inner arched edge 5 of the annular band 1 on the corresponding contact surface 2, 3.

According to a first preferred embodiment, the third plurality of recesses 11 is made, on at least one of the contact surfaces 2, 3, at least partly on the radial protrusions 6 on the inner edge 4 of the annular band 1.

Again according to a preferred embodiment, the third plurality of recesses 11 is made, on at least one of the contact surfaces 2, 3 in an intermediate stretch or area of the inner edge 5 defined by two radial consecutive protrusions 6.

In a further alternative embodiment, the two surfaces can both have one of the two configurations of the third plurality of recesses 11 described below. The third plurality of recesses 11 has a curved shape (that is, a flat conical curved portion), preferably a circular arc shape, wherein the open portion of the arc coincides with the stretch of the inner edge 4 touched by the annular band 1.

It should be noted that the third plurality of recesses 11 has an equal depth P on the corresponding contact surface 2, 3 of the annular band 1. Alternatively, the third plurality of recesses 11 may have different depth P on the corresponding contact surface 2, 3 of the annular band 1.

A further feature of the brake disc 100 is that it comprises a fourth plurality of recesses 12 made on the contact surfaces 2, 3 of the annular band 1 in areas not involved by the first, second and third plurality of recesses 9, 10 and 11.

In light of this, each recess 12 of the fourth plurality comprises at least one outer first portion 12a defining a partial reduction of the thickness S of the corresponding contact surface 2, 3 involved, and a second portion 12b passing from surface 2 to surface 3, made at least partly in the outer first portion 12a.

It should be noted that the fourth plurality of recesses 12 is made in an intermediate zone of the annular band 1 and may have (as shown in Figures 1 to 3) a range of combinations according to the design needs. The fourth plurality of recesses 12 is formed on both the contact surfaces 2, 3.

The presence of the fourth plurality of recesses 12 has the twofold purpose of increasing the thermal-mechanical performance of the annular band 1 and reducing the mass of the brake disc as a whole.

Preferably, the first portion 12a has a shape at least semi-curved, preferably semi-circular, whilst the second portion 12b has the shape of a preferably through slot wherein at least one relative end is made in the inner central part of the first portion 12a.

At least one of these fourth recesses 12 comprises two first portions 12a connected by a second portion 12a the corresponding slotted ends of which are made in the corresponding inner centre of the two first portions 12a.

A brake disc structured in this way achieves the set aims thanks to the presence of edge recesses or spot facing or rebates made on the contact surfaces of the annular band.

This structure offers a series of advantages.

The presence of inner and outer recesses / spot facing or rebates, that is, the possibility, for the same mass and inertia of the braking band, of exposing a greater exchange surface to the flow of air and, potentially, increasing the heat dissipation capacity compared to the existing disc brake solutions (bringing them closer, in particular, to the performance guaranteed by the self-ventilating disc brake solution).

This increased heat dissipation capacity leads to a smoothness in the behaviour and in the response of the breaking system during all its operational phases and is achieved without increasing the mass of the disc nor its moment of inertia with respect to the wheel axle; in other words, it is achieved without penalising the dynamic characteristics of the motorcycle not altering the response of the front suspension, especially in the most intense use of the motorcycle.

The presence of the recesses on the braking band makes it possible to obtain lower operating temperatures, thanks to the greater heat dissipation, and that means a lower thermal stress for the brake pads and increases the resistance of the braking system to "fading" (that is, the capacity to maintain the braking force unchanged after repeated operations), limiting the overheating of all the components of the braking system.

A further advantage induced by the presence of the recesses/spot facing or rebates is due to the possibility of making one of the recesses/spot facing or rebates on the visible surface of the braking band, which acts as an element for signalling the wear of the braking band, for example, making the recess/spot facing or rebate with a suitable depth and different from the others and, if necessary, with a colour different from the others: the signalling of when the wear limit is reached would correspond to the disappearance of the spot facing or rebate

Another advantage is due to the fact that the presence of recesses or spot facing or rebates on the surfaces of the braking band bring a greater dressing of the friction seal with respect to a similar model of round brake disc.

A further advantage is given by the greater resistance to the lateral stresses offered by the structure of the braking band obtained in this way, relative, for example, to the "wave" brake disc models.

## Claims

1. A brake disc comprising:
- an annular monolithic band (1) having a thickness (S) forming two flat parallel surfaces (2, 3) defining the contact zones with friction members for the brake and delimited by an outer edge (4) and an inner edge (5); the annular band (1) having the inner edge (5) equipped with a plurality of protrusions or ribs (6); the annular monolithic band (1) and the plurality of protrusion or ribs (6) deriving from a machining of a single unfinished mechanical part;
- an element (7) for supporting the annular band (1) associated, or which can be associated, with the protrusions or ribs (6) of the inner edge (5) of the annular band (1); the supporting element (7) being configured to be keyed centrally to a hub of a rotary element,
**characterised in that** at least one contact surface (2, 3) of the annular band (1) has a first plurality of recesses (9) made at least along the outer edge (4) of the annular band (1); each first recess (9) being configured so as to define, in the area involved, a reduction of the thickness (S) of the annular band (1) comprising at least one stretch of the outer edge (4) of the annular band (1) on the corresponding contact surface (2, 3).

2. The brake disc according to claim 1, wherein both the contact surfaces (2, 3) of the annular band (1) have a first and a second plurality of recesses (9, 10) made on the outer edge (4) of the annular band (1) itself.

3. The brake disc according to claim 2, wherein the first and the second plurality of recesses (9, 10) made on the two contact surfaces (2, 3) of the annular band (1) are positioned alternating with each other along the circular perimeter of the annular band (1) itself.

4. The brake disc according to any one of the preceding claims, wherein each recess (9, 10) has an arched shape, wherein the open portion of the arc coincides with the stretch of the outer edge (4) involved of the annular band (1).

5. The brake disc according to any one of the preceding claims, wherein each recess (9, 10) has equal depth (P) on the corresponding contact surface (2, 3) of the annular band (1).

6. The brake disc according to any of claims from 1 to 4, wherein the recesses (9, 10) have different depths (P) on the corresponding contact surface (2, 3) of the annular band (1).

7. The brake disc according to any one of the preceding claims, comprising a third plurality of recesses (11) made along the inner edge (5) of the annular band (1); each recess (11) of the third plurality being configured so as to define, in the area involved, a reduction of the thickness (S) of the annular band (1) comprising at least one stretch of the inner arched edge (5) of the annular band (1) on the corresponding contact surface (2, 3).

8. The brake disc according to claim 7, wherein the third plurality of recesses (11) is made, on at least one of the contact surfaces (2, 3), at least partly on the radial protrusions (6) on the inner edge (4) of the annular band (1).

9. The brake disc according to either of claims 7 or 8, wherein the third plurality of recesses (11) is made, on at least one of the contact surfaces (2, 3), in an intermediate stretch or section of the outer edge (4) defined by two radial consecutive protrusions (6).

10. The brake disc according to any one of the preceding claims, comprising a fourth plurality of recesses (12) made on the contact surfaces (2, 3) of the annular band (1) in areas not involved by the first, second and third plurality of recesses (9, 10, 11); each recess (12) of the fourth plurality comprising at least one outer first portion (12a) defining a partial reduction of the thickness (S) of the corresponding contact surface (2, 3) involved, and a second portion (12b) passing from surface (2) to surface (3), made at least partly in the outer first portion (12a).

## Patentansprüche

1. Bremsscheibe, umfassend:
- ein ringförmiges, einteiliges Band (1), aufweisend eine Dicke (S), formend zwei flache parallele Oberflächen (2, 3), definierend die Kontaktzonen mit Reibungselementen für die Bremse und begrenzt durch eine äußere Kante (4) und eine innere Kante (5), wobei die innere Kante (5) des ringförmigen Bands (1) mit einer Vielzahl an Vorsprüngen oder Rippen (6) ausgestattet ist, wobei das ringförmige, einteilige Band (1) und die Vielzahl an Vorsprüngen oder Rippen (6) auf einer Bearbeitung eines einzelnen unbearbeiteten mechanischen Teils basieren;
- ein Element (7) zum Stützen des ringförmigen Bands (1), das mit den Vorsprüngen oder Rippen (6) der inneren Kante (5) des ringförmigen Bands (1) assoziiert ist oder assoziiert werden kann, wobei das Stützelement (7) ausgelegt ist, um mittig an einer Nabe eines rotatorischen Elements verkeilt zu werden,
**dadurch gekennzeichnet, dass** mindestens eine Kontaktoberfläche (2, 3) des ringförmigen Bands (1) eine erste Vielzahl an Vertiefungen (9) aufweist, die mindestens entlang der äußeren Kante (4) des ringförmigen Bands (1) ausgebildet sind, wobei eine jede erste Vertiefung (9) ausgelegt ist, um im betroffenen Bereich eine Reduzierung der Dicke (S) des ringförmigen Bands (1), umfassend mindestens ein Teilstück der äußeren Kante (4) des ringförmigen Bands (1) an der entsprechenden Kontaktoberfläche (2, 3), zu definieren.

2. Bremsscheibe nach Anspruch 1, wobei beide Kontaktoberflächen (2, 3) des ringförmigen Bands (1) eine erste und eine zweite Vielzahl an Vertiefungen (9, 10) aufweisen, die an der äußere Kante (4) des ringförmigen Bands (1) ausgebildet sind.

3. Bremsscheibe nach Anspruch 2, wobei die erste und die zweite Vielzahl an Vertiefungen (9, 10), die an den zwei Kontaktoberflächen (2, 3) des ringförmigen Bands (1) ausgebildet sind, abwechselnd entlang des kreisförmigen Umfangs des ringförmigen Bands (1) positioniert sind.

4. Bremsscheibe nach einem der vorhergehenden Ansprüche, wobei eine jede Vertiefung (9, 10) eine bogenförmige Ausgestaltung aufweist, wobei der offene Abschnitt des Bogens mit dem Teilstück der äußeren Kante (4), die vom ringförmigen Band (1) betroffen ist, übereinstimmt.

5. Bremsscheibe nach einem der vorhergehenden Ansprüche, wobei eine jede Vertiefung (9, 10) eine gleiche Tiefe (P) an der entsprechenden Kontaktoberfläche (2, 3) des ringförmigen Bands (1) aufweist.

6. Bremsscheibe nach einem der Ansprüche 1 bis 4, wobei die Vertiefungen (9, 10) unterschiedliche Tiefen (P) an der entsprechenden Kontaktoberfläche (2, 3) des ringförmigen Bands (1) aufweisen.

7. Bremsscheibe nach einem der vorhergehenden Ansprüche, umfassend eine dritte Vielzahl an Vertiefungen (11), die entlang der inneren Kante (5) des ringförmigen Bands (1) ausgebildet sind, wobei eine jede Vertiefung (11) der dritten Vielzahl ausgelegt ist, um im betroffenen Bereich eine Reduzierung der Dicke (S) des ringförmigen Bands (1), umfassend mindestens ein Teilstück der inneren Bogenkante (5) des ringförmigen Bands (1) an der entsprechenden Kontaktoberfläche (2, 3), zu definieren.

8. Bremsscheibe nach Anspruch 7, wobei die dritte Vielzahl an Vertiefungen (11) an mindestens einer der Kontaktoberflächen (2, 3) mindestens teilweise an den radialen Vorsprüngen (6) an der inneren Kante (4) des ringförmigen Bands (1) ausgebildet ist.

9. Bremsscheibe nach Anspruch 7 oder 8, wobei die dritte Vielzahl an Vertiefungen (11) an mindestens einer der Kontaktoberflächen (2, 3) in einem Zwischenteilstück oder -abschnitt der äußeren Kante (4) ausgebildet ist, definiert von zwei radialen aufeinanderfolgenden Vorsprüngen (6).

10. Bremsscheibe nach einem der vorhergehenden Ansprüche, umfassend eine vierte Vielzahl an Vertiefungen (12), ausgebildet an den Kontaktoberflächen (2, 3) des ringförmigen Bands (1) in Bereichen, die von der ersten, zweiten und dritten Vielzahl an Vertiefungen (9, 10, 11) nicht betroffen sind, wobei eine jede Vertiefung (12) der vierten Vielzahl mindestens einen äußeren ersten Abschnitt (12a), definierend eine teilweise Reduzierung der Dicke (S) der entsprechenden betroffenen Kontaktoberfläche (2, 3) und einen zweiten Abschnitt (12b) umfasst, führend von der Oberfläche (2) zur Oberfläche (3), ausgebildet mindestens teilweise im äußeren ersten Abschnitt (12a).

## Revendications

1. Disque de frein comprenant :
- une bande annulaire (1) monolithique ayant une épaisseur (S) formant deux surfaces parallèles (2, 3) plates définissant les zones de contact avec des organes de frottement pour le frein et délimitées par un bord extérieur (4) et un bord intérieur (5) ; la bande annulaire (1) comportant le bord intérieur (5) équipé d'une pluralité de saillies ou nervures (6) ; la bande annulaire (1) monolithique et la pluralité de saillies ou nervures (6) provenant d'un usinage d'une seule pièce mécanique non finie ;
- un élément (7) pour supporter la bande annulaire (1) associé ou pouvant être associé aux saillies ou nervures (6) du bord intérieur (5) de la bande annulaire (1) ; l'élément de support (7) étant configuré pour être calé centralement à un moyeu d'un élément rotatif,
**caractérisé en ce qu'**au moins une surface de contact (2, 3) de la bande annulaire (1) comporte une première pluralité de renfoncements (9) réalisés au moins le long du bord extérieur (4) de la bande annulaire (1) ; chaque premier renfoncement (9) étant configuré de sorte à définir, dans la zone concernée, une réduction de l'épaisseur (S) de la bande annulaire (1) comprenant au moins une portion du bord extérieur (4) de la bande annulaire (1) sur la surface de contact (2, 3) correspondante.

2. Disque de frein selon la revendication 1, dans lequel les deux surfaces de contact (2, 3) de la bande annulaire (1) comportent une première et une seconde pluralité de renfoncements (9, 10) réalisés sur le bord extérieur (4) de la bande annulaire (1) elle-même.

3. Disque de frein selon la revendication 2, dans lequel la première et la seconde pluralité de renfoncements (9, 10) réalisés sur les deux surfaces de contact (2, 3) de la bande annulaire (1) sont positionnés en alternance les uns avec les autres le long du périmètre circulaire de la bande annulaire (1) elle-même.

4. Disque de frein selon l'une quelconque des revendications précédentes, dans lequel chaque renfoncement (9, 10) possède une forme arquée, dans lequel la partie ouverte de l'arc coïncide avec la portion du bord extérieur (4) concerné de la bande annulaire (1).

5. Disque de frein selon l'une quelconque des revendications précédentes, dans lequel chaque renfoncement (9, 10) a une profondeur (P) identique sur la surface de contact (2, 3) correspondante de la bande annulaire (1).

6. Disque de frein selon l'une quelconque des revendications de 1 à 4, dans lequel les renfoncements (9, 10) ont des profondeurs (P) différentes sur la surface de contact (2, 3) correspondante de la bande annulaire (1).

7. Disque de frein selon l'une quelconque des revendications précédentes, comprenant une troisième pluralité de renfoncements (11) réalisés le long du bord intérieur (5) de la bande annulaire (1) ; chaque renfoncement (11) de la troisième pluralité étant configuré de sorte à définir, dans la zone concernée, une réduction de l'épaisseur (S) de la bande annulaire (1) comprenant au moins une portion du bord intérieur (5) arqué de la bande annulaire (1) sur la surface de contact (2, 3) correspondante.

8. Disque de frein selon la revendication 7, dans lequel la troisième pluralité de renfoncements (11) est réalisée, sur au moins une des surfaces de contact (2, 3), au moins partiellement sur les saillies radiales (6) sur le bord intérieur (4) de la bande annulaire (1) .

9. Disque de frein selon la revendication 7 ou 8, dans lequel la troisième pluralité de renfoncements (11) est réalisée, sur au moins une des surfaces de contact (2, 3), dans une portion intermédiaire ou section du bord extérieur (4) définie par deux saillies radiales (6) consécutives.

10. Disque de frein selon l'une quelconque des revendications précédentes, comprenant une quatrième pluralité de renfoncements (12) réalisés sur les surfaces de contact (2, 3) de la bande annulaire (1) dans des zones non concernées par les première, seconde et troisième pluralités de renfoncements (9, 10, 11) ; chaque renfoncement (12) de la quatrième pluralité comprenant au moins une première partie extérieure (12a) définissant une réduction partielle de l'épaisseur (S) de la surface de contact (2, 3) correspondante concernée, et une seconde partie (12b) passant de surface (2) à surface (3), réalisée au moins partiellement dans la première partie extérieure (12a).
